(19) **Europäisches Patentamt**

**European Patent Office**

**Office européen des brevets**

(11) Publication number : **0 344 132 B1**

(12) **EUROPEAN PATENT SPECIFICATION**

(45) Date of publication of patent specification :
28.10.92 Bulletin 92/44

(51) Int. Cl.⁵ : **F16L 33/02, F16L 3/12, F16B 2/08**

(21) Application number : **89830227.8**

(22) Date of filing : **23.05.89**

(54) **Metal clamp for joining pipes.**

(30) Priority : **26.05.88 IT 2073988**

(43) Date of publication of application :
**29.11.89 Bulletin 89/48**

(45) Publication of the grant of the patent :
**28.10.92 Bulletin 92/44**

(84) Designated Contracting States :
**AT BE CH DE ES FR GB GR IT LI LU NL SE**

(56) References cited :
**EP-A- 0 243 224**
**DE-A- 3 308 399**
**DE-B- 1 775 914**
**FR-A- 2 470 275**

(73) Proprietor : **ARCELLI & BERNACCHI S.r.L.**
**via Piave, 66**
**I-20040 Busnago (Milano) (IT)**

(72) Inventor : **Bellazzi, Emilio**
**Via Piave, 66**
**Busnago (Milano) (IT)**

(74) Representative : **Beneduce, Gianna**
**Via Poggibonsi, 14**
**I-20146 Milano (IT)**

Jouve, 18, rue Saint-Denis, 75001 PARIS

## Description

The present invention relates to a substantially cylindrically shaped metal clamp made from a strap, suitable for locking joints of two co-axial pipes, of which the external one is made from a suitably deformable material, so that a deformation of the outer pipe, on locking the clamp, occurs under the clamp pressure, thus assuring a perfect joint of the pipes.

The main peculiarity of the connection between pipes is to assure a perfect sealing not only on locking the clamp and in normal operating conditions, but also in anomalous ones such as those caused by vibrations, knocks, pressure increases in the fluid flow inside the pipes, different thrusts in the connected pipes and finally in conditions occuring sometimes after the locking when the external pipe may have changed its properties e.g. by ageing.

Perfect sealing is assured only when the clamp causes, even in anomalous operating conditions, a uniform pressure on the whole external pipe made from a deformable material.

A different clamp pressure would cause a possible detachment of the joint, where the clamp pressure is too low, and a useless squeezing of the deformable pipe, which might cause permanent tearing, where the clamp pressure is too high.

If perfect joint sealing between two pipes is the fundamental feature to be achieved in a joint, it is also necessary that suitable means of ensuring such sealing be of easy application, smooth and quick assembly and therefore unexpensive to be manufactured.

Many devices have been made in order to achieve said peculiarities, but it is not always possible to obtain economically acceptable embodiments.

In DE-A-3 308 399 a metal clamp is disclosed which consists of a unitary band formed successively from one end to the other with a first curved portion, an outwardly directed first bend which slants backwardly towards a second curved portion, a second outwardly directed bend, a straight portion and an inturning hooked end.

On locking said clamp, the hooked end engages the first bend. Although of simple manufacturing, this clamp has the inconvenience that when the outer pipe is formed from a deformable, but rather rigid material, the pressure of the clamp on said outer deformable pipe is not perfectly uniform, with the risk of compromising a satisfactory locking, unless a higher pressure is applied which could deteriorate the outer deformable pipe.

The metal clamp object of the present invention represents a good solution, because it combines an excellent funtioning perfect sealing in the most varied conditions with a very easy application, to a simple and economical manufacture. For a better description of the metal clamp of the invention reference is made to the attached drawings which, however, should not be considered limiting the invention itself.

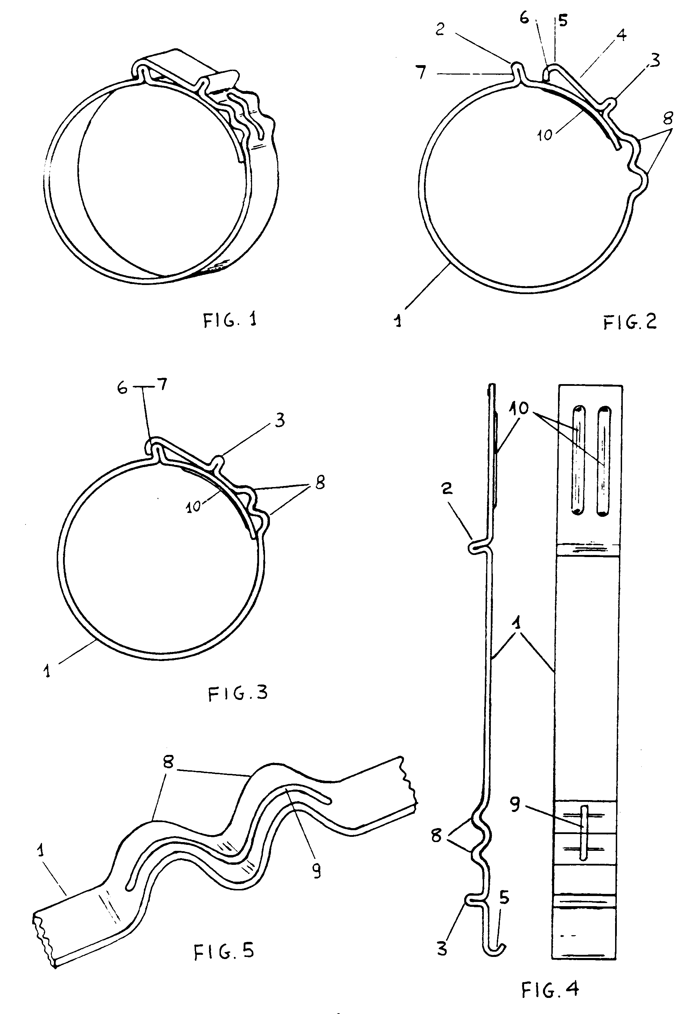

FIGURE 1 is an axonometric perspective view of the metal clamp already locked,

FIGURE 2 is a front view of the metal clamp just before locking (pre-locking),

FIGURE 3 is a front view of the metal clamp already locked,

FIGURE 4 is a front and side view of the metal clamp in its straight development,

FIGURE 5 shows the clamp portion in which two adjacent waves give the strap and the clamp the 'm' shape.

Said drawings show: base strap 1; bend 2, extending in a non-radial direction; bend 3 which may extend in a radial direction; the straight elastic arm 4 and the open bend or hook 5. Said hook 5 has and internal part 6 which, when the clamp is hooked, must be co-planar with part 7, external to bend 2. The two adjacent waves 8, which give the clamp in that position a peculiar 'm' shape, are well outlined, especially in Figure 5, which shows them in detail.

The clamp portion at the two waves bears a longitudinal cut or slit 9 made along the axis, involving the entire clamp thickness.

In the drawings only two waves 8 are shown, not in a limiting way, but these may be in a number from 2 to 4.

In a preferred embodiment of the clamp of the invention, shown in the attached drawings, the end near the non-radial bend 2 is reinforced by ribs 10.

To join two co-axial pipes, the clamp is applied in a very simple way with clamping pliers which act on the bends 2 and 3 in order to move hook 5 near bend 2. Bend 2 peculiar non-radial direction allows arm 4, made elastic by bend 3, to easily surmount bend 2 and to go down on the other side of said bend 2, while the hook portion 6 runs along the portion 7 of the bend 2 as far as the final locking position is reached, in which the co-planarity of the surfaces of said portions 6 of hook 5 and 7 of bend 2, occurs.

Fundamental importance during the locking is provided by the 'm' shaped clamp portion 8, which adds elasticity and, therefore, a smooth application of the clamp. Again, in final locking position, the bend 2 peculiar non-radial direction is important as it allows an extremely effective locking.

The peculiar coupling of hook 5 and bend 2 is able to absorb all forces exerted thereon, both in the normal joint working conditions and in particular temporary ones, due to vibrations, knocks, pressure increases in fluid flow inside the pipes, different thrusts on the two pipes, deformation in the pipe made from deformable material et cetera.

The 'm' shaped clamp portion having the two waves 8 assumes basic importance. It allows the clamp, whatever the hardness of the deformable pipe material is, to completely adhere to it and, therefore, to exert a uniform pressure in every point, which is an essential condition for preventing joint detachment, where the clamp pressure is too low, as well as a useless squeezing of the deformable pipe, where the clamp pressure is too high.

When the deformable pipe is made from hard material, such as hard rubber, the 'm' shaped clamp portion, resulting particularly elastic because of the cut or slit 9, stretches so as to lie on the pipe. Said considerable stretching of the 'm' shaped clamp portion does not occur when the pipe is made from soft material, though stretching accurs in such an extent to ensuring a uniform pressure exerted by the metal clamp on the external deformable pipe and, therefore, a perfect joint sealing.

## Claims

1. A substantially cylindrically shaped metal clamp suitable for joining co-axial pipes of which the external one is made from deformable material, said clamp being obtained from a base strap (1) folded into outwardly extending bends (2) and (3) at positions near its two ends, one of said bends (2) extending in a non-radial direction and the band end extending therefrom near to another bend (3), which may extend in a radial direction and from which the other band end extends for a short straight line (4) ending in an open bend (5), which, on locking the clamp, hooks on the non-radial bend (2) near the other end of the clamp, characterized by the fact that in said clamp wide wave-shaped bends (8) are provided near the end where the straight hooking arm (4) is provided, said bends (8) giving the clamp portion where they are positioned an 'm' shape and by the fact that in said 'm' shaped portion a central lengthwise slit (9) is provided.

2. A metal clamp according to claim 1, characterized by the fact that two wide wave-shaped adjacent bends (8) are provided therein.

## Patentansprüche

1. Eine im wesentlichen zylindrisch geformte Metallklammer, die für die Verbindung koaxialer Rohre geeignet ist, wobei das äußere aus verformbarem Material besteht und die genannte Klammer aus einem Basisstreifen (1) hergestellt wird, der in Positionen in der Nähe seiner beiden Enden in sich nach außen erstreckende Bögen (2) und (3) gefaltet wird, wobei sich einer der genannten Bögen (2) in einer nichtradialen Richtung erstreckt und sich das Bogenende bis in die Nähe eines anderen Bogens (3) erstreckt, der sich in radialer Richtung erstrecken kann und von dem ausgehend der andere Bogen in einer kurzen geraden Linie (4) verläuft, die an einem offenen Bogen (5) endet, der bei der Verblockung der Klammer in den nichtradialen Bogen (2) in der Nähe des anderen Endes der Klammer einhakt, dadurch gekennzeichnet, daß in der genannten Klammer breit geformte Bögen (8) in der Nähe des Endes vorgesehen sind, an dem der gerade Hakenarm (4) vorgesehen ist, wobei die genannten Bögen (8) dem Klemmteil an der Stelle, an der sie angebracht sind, eine "m"-Form geben, und dadurch, daß sich in dem genannten "m"-förmigen Teil ein zentraler, längsförmiger Schlitz (9) befindet.

2. Metallklammer nach Anspruch 1, dadurch gekennzeichnet, daß darin zwei wellenförmige, nebeneinander angeordnete Bögen (8) vorgesehen sind.

## Revendications

1. Organe de serrage métallique de forme à peu près cylindrique, ou collier, approprié pour la jonction de tuyaux coaxiaux dont l'un, externe, est fait d'un matériau déformable, ledit collier de serrage étant obtenu à partir d'une bande de base (1) pliée afin de former des coudes (2) et (3) s'étendant vers l'extérieur dans des positions voisines de ses deux extrémités, l'un (2) desdits coudes s'étendant dans une direction non radiale et l'extrémité de la bande s'étendant à partir de celuici jusqu'au voisinage d'un autre coude (3), qui peut s'étendre dans une direction radiale et à partir duquel l'autre extrémité de la bande s'étend suivant une courte portion rectiligne (4) se terminant par un coude ouvert (5) qui, lors du serrage du collier, s'accroche sur le coude non radial (2) au voisinage de l'autre extrémité du collier, caractérisé en ce qu'il est prévu deux portions courbées en forme d'ondulations (8) au voisinage de l'extrémité où est prévu le bras rectiligne d'accrochage (4), lesdites ondulations (8) conférant à la portion du collier de serrage dans laquelle elles sont prévues une forme en "m", et en ce qu'il est prévu, dans ladite portion en forme de"m", une fente longitudinale médiane (9).

2. Organe de serrage métallique, suivant la revendication 1, caractérisé en ce qu'il comporte deux larges coudes adjacents (8) en forme d'onde.

FIG. 1

FIG.2

FIG.3

FIG.5

FIG.4